# EUROPÄISCHE PATENTSCHRIFT

(11) **EP 2 360 373 B1**
(45) Veröffentlichungstag und Bekanntmachung des Hinweises auf die Patenterteilung: **14.11.2018**
(21) Anmeldenummer: 11164384.7
(22) Anmeldetag: 27.08.2009
(51) Int. Cl.: F03D 1/00, E02D 27/18, E02D 27/42, E02B 17/02, F03D 13/10, E02B 17/00, F03D 13/20

(54) **Off-Shore-Anlage, Fundament einer Off-Shore-Anlage und Verfahren zum Errichten einer Off-Shore-Anlage**
Offshore station, foundation for an offshore station, and method for building an offshore station
Installation offshore, fondation d'une installation offshore et procédé d'établissement d'une installation offshore

(30) Priorität: 05.09.2008 DE 102008041849
(43) Veröffentlichungstag der Anmeldung: 24.08.2011
(62) Teilanmeldung aus: 09782257.1
(73) Patentinhaber: Max Bögl Stiftung & Co. KG, 92369 Sengenthal (DE)
(72) Erfinder: Bögl, Stefan, 92369 Sengenthal (DE); Reichel, Dieter, 92318 Neumarkt (DE)
(74) Vertreter: Bergmeier, Werner

(56) Entgegenhaltungen:
- WO-A1-99/43910
- WO-A1-99/43956
- DE-T2- 60 309 668
- FR-A1- 2 887 900
- US-A1- 2001 036 387

## Beschreibung

Die vorliegende Erfindung betrifft eine Off-Shore-Anlage, insbesondere Off-Shore-Windkraftanlage, mit einem schwimmfähigen und durch Fluten eines Hohlraumes absenkbaren Fundament sowie einem Aufbau, an welchem Funktionseinheiten, insbesondere eine Gondel und ein Rotor einer Windkraftanlage, angeordnet sind. Weiterhin betrifft die Erfindung ein Fundament einer Off-Shore-Anlage und ein Verfahren zum Errichten einer Off-Shore-Anlage, insbesondere Off-Shore-Windkraftanlage, bei welchem ein schwimmfähiges Fundament in einem Hafenbereich vorgefertigt wird, nach seiner Fertigstellung an einen Einbauort geschleppt wird und dort abgesenkt wird. Anschließend wird am Einbauort die Anlage mit dem Aufbau und Funktionseinheiten, insbesondere einer Gondel und einem Rotor einer Windkraftanlage, fertiggestellt.

Zur Errichtung von Off-Shore-Windkraftanlagen sind verschiedene Verfahren bekannt geworden. So werden beispielsweise als Fundamente Senkkästen aus Stahl oder armiertem Beton verwendet, welche an Land gebaut werden und für verschiedene Typen von Seebett verwendbar sind. Die Senkkastenfundamente sind schwimmfähig und werden mit Hilfe von Lastkränen an die Einbaustelle transportiert. An ihrer Einbauposition werden die Senkkästen mit Sand, Kies oder einem anderen dichten Material gefüllt, um ihnen das erforderliche Gewicht zu verleihen. Die Windkraftanlage selbst wird hierbei in der Regel in einem nahegelegenen Hafen vollständig montiert und mittels eines Lastschiffes an die Einbaustelle transportiert. Am Einbauort werden die Türme der Windkraftanlagen mit Hilfe von Schwimmkränen aufgerichtet und auf dem Fundament montiert. Der Einsatz von Schwimmkränen ist vergleichsweise kostenintensiv. Zudem sind Transport und Aufrichtung des Turmes stark wetterabhängig.

Die DE 10 2007 002 314 A1 sieht vor, dass ein an Land vorgefertigtes Fundament einer Off-Shore-Anlage bzw. ggf. auch eine vollständig vorgefertigte Windkraftanlage an einem speziell ausgebildeten Transportschiff beispielsweise mittels Seilen aufgehängt wird und hierdurch mit ihm verbunden wird. Das Fundament beinhaltet einen Tauchkörper, dessen Auftrieb erhöht werden kann, so dass das Fundament durch das Spezialschiff an die Einbaustelle geschleppt werden kann. Dort wird das Fundament durch Lösen der Aufhängung abgesenkt. Das Transportschiff wird wiederum von dem Fundament gelöst und vom Einbauort entfernt. Das spezielle ausgebildete Schiff kann auch lediglich als Schwimmkörper ohne eigenen Antrieb ausgebildet sein und muss wiederum mittels eines weiteren Schiffes an die Einbaustelle verbracht werden. Das Fundament bzw. die Anlage selbst sind hierbei nicht schwimmfähig.

Die DE 102 06 585 A1 und DE 2 359 540 sehen vor, ein schwimmfähiges Fundament zumindest teilweise an Land oder in einem Hafenbereich zu fertigen, an den Einbauort zu verbringen und dort abzusenken. Das schwimmfähige Fundament wird jeweils durch Fluten abgesenkt und gegebenenfalls durch Einspülen im Meeresboden verankert. Bei der DE 2 359 540 wird auf dieses Fundamentfloß ein Turmaufbau aufgebracht, welcher ebenfalls schwimmfähig ausgebildet ist und an Land vorgefertigt ist. Der Turmaufbau wird in waagrechter Lage zum Einbauort geschleppt, dort durch kontrolliertes Fluten, ggf. mit Hilfe spezieller Hebezeuge aufgerichtet und in eine entsprechende Ausnehmung des Fundamentes angesenkt. Erst dann kann ein Aufbau auf dem Turm montiert werden, welcher im Falle der DE 2 359 540 zur Ölgewinnung ausgebildet ist. Der Aufbau ist ebenfalls an Land oder in einem Hafen vorgefertigt, wird zum Einbauort geschleppt und dort auf dem Turm montiert.

Die DE 102 06 585 A1 beschreibt ein Turmfundament, welches aus einer Vielzahl von einzeln flutbaren, zylinderförmigen Kammern besteht. Das Turmfundament wird an Land vorgefertigt und liegend an seinen Einbauort geschleppt. Dort werden wiederum die Kammern kontrolliert geflutet, das Turmfundament in die vertikale Position aufgerichtet und abgesenkt. Das Turmfundament ragt zur Aufnahme des Aufbaus der Off-Shore-Anlage über die Wasseroberfläche hinaus. Da während des Absenkens die Schwimmstabilität stark beeinträchtigt ist, ist eine externe Stabilisierung vorgesehen.

Die WO 99/43956 A1 beschreibt eine Windkraftanlage mit einem Fundament, bei dem eine Bodenplatte sowie ein Turmsockel, der der Aufnahme eines Aufbaus mit den Funktionseinheiten der Windkraftanlage dient, aus Betonfertigteilen aufgebaut sind. Die Bodenplatte besteht aus mehreren, miteinander verbundenen kreissegmentförmigen Betonfertigteilen, die jeweils in radialer Richtung vorgespannt sein können. Der Sockel besteht aus mehreren ringförmigen und übereinander angeordneten Betonfertigteilen, die durch Bolzen mit der Bodenplatte verbunden sind.

Aufgabe der vorliegenden Erfindung ist es, eine Off-Shore-Anlage mit einem schwimmfähigen Fundament sowie ein entsprechendes Fundament vorzuschlagen, welches einfach herstellbar und an den Einbauort transportierbar ist. Weiterhin soll ein entsprechendes Verfahren vorgeschlagen werden.

Die Aufgabe wird gelöst mit den Merkmalen der unabhängigen Ansprüche.

Eine Off-Shore-Anlage, insbesondere Off-Shore-Windkraftanlage, beinhaltet ein schwimmfähiges und durch Fluten eines Hohlraums absenkbares Fundament sowie einen Aufbau, an welchem Funktionseinheiten der Anlage angeordnet sind. Die Anlage kann beispielsweise eine Off-Shore-Windkraftanlage sein, bei welcher auf das Fundament ein Turm der Windkraftablage montiert ist, an welchem wiederum die Gondel und der Rotor als Funktionseinheiten angeordnet sind. Das Fundament beinhaltet eine Bodenplatte sowie einen auf der Bodenplatte angeordneten Sockel. Der Sockel ist ragt in abgesenktem Zustand des Fundaments über die Wasseroberfläche hinaus, so dass auf ihm in einfacher Weise und ohne Arbeiten unter Wasser der Aufbau montierbar ist. Weiterhin beinhaltet das Fundament einen vorzugsweise ringförmig um den Sockel ausgebildeten, flutbaren Schwimmkörper. Durch den vorzugsweise ringförmigen Schwimmkörper kann trotz der Höhe des Sockels eine günstige Schwerpunktlage des Fundaments mit dem Sockel erreicht werden, so dass das Fundament besonders schwimmstabil ist und in Einbaulage an den Einbauort geschleppt werden kann. Auch kann das Fundament bedingt durch die günstige Schwerpunktlage ohne äußere Stabilisierung am Einbauort versenkt werden. Der Sockel der Anlage kann hierbei ebenfalls bereits bei der Vorfertigung des Fundaments direkt mit der Bodenplatte verbunden werden, so dass diesbezügliche Anschlussarbeiten am Einbauort entfallen.

Bei einem Verfahren zum Errichten einer Off-Shore-Anlage wird ein schwimmfähiges Fundament in einem Hafenbereich vorgefertigt. Nach seiner Fertigstellung wird das schwimmfähige Fundament an einen Einbauort geschleppt und dort abgesenkt. Anschließend wird am Einbauort die Anlage mit einem Aufbau, beispielsweise einem Turm einer Windkraftanlage, sowie Funktionseinheiten der Anlage, beispielsweise einer Gondel und einem Rotor, komplettiert. Im Hafenbereich wird eine Bodenplatte des Fundaments betoniert, auf die Bodenplatte ein Sockel des Aufbaus montiert und nach dem Montieren des Sockels ein vorzugsweise ringförmig um den Sockel ausgebildeter, flutbarer Schwimmkörper an der Bodenplatte und/oder dem Sockel montiert wird. Das Fundament beinhaltet somit den gesamten Unterbau der Anlage, welcher sich knapp bis über die Wasseroberfläche erstreckt. Durch das Verfahren kann das gesamte Fundament mit dem Sockel bereits On-Shore oder auf einem Schwimmponton in einem Hafenbereich vorgefertigt werden. Ebenso kann das Fundament in einem Trockendock gefertigt werden und anschließend zu Wasser gelassen werden.

Vorzugsweise wird der Sockel im Hafenbereich aus Betonfertigteilen gefertigt, so dass das Fundament besonders einfach und schnell aufbaubar ist. Lange Hafenliegezeiten, welche mit Kosten verbunden sind, werden hierdurch vermieden. Die Betonfertigteile können günstig vorgefertigt werden und ohne aufwändige Spezialtransporte an den Hafen transportiert werden. Es kann jedoch auch ein bereits an Land vormontierter Sockel auf die Bodenplatte montiert werden, so dass der Aufbau auf die Bodenplatte besonderes schnell bewerkstelligt werden kann. Der Sockel kann ebenfalls aus Betonfertigteilen aufgebaut sein.

Vorzugsweise ist der Schwimmkörper hierbei ebenfalls im wesentlichen aus Fertigteilen, bevorzugt aus Betonfertigteilen, aufgebaut. Hierdurch können sämtliche Bauteile des Fundaments günstig an Land vorgefertigt und im Hafenbereich schnell montiert werden. Die benötigte Montagezeit im Hafenbereich kann hierdurch günstig reduziert werden.

Zumindest eine äußere Ringwand des Schwimmkörpers wird hierbei vorzugsweise in Fertigteilbauweise auf der Bodenplatte erstellt. Eine Fertigung der äußeren Ringwand im Ortbeton ist jedoch prinzipiell ebenso denkbar. Besonders vorteilhaft ist es hierbei, wenn die Ringwand direkt auf der Bodenplatte montiert wird, so dass diese zugleich den Boden des Schwimmkörpers bildet. Der Aufbau des Fundaments kann hierdurch besonders einfach gehalten werden.

Eine Deckplatte des Schwimmkörpers kann ebenfalls in Fertigteil- oder Ortbetonweise auf der äußeren Ringwand montiert werden. Wird die Deckplatte in Fertigteilbauweise gefertigt, so ist es vorteilhaft, wenn die Fertigteile ringsegmentförmig ausgebildet sind, so dass diese einfach um den Sockel angeordnet werden können. Auch die einzelnen Betonfertigteile der Ringwand und des Sockels können ringsegmentförmig ausgebildet sein, so dass sie in günstiger Weise montierbar sind und eine stabile Konstruktion aufgebaut werden kann. Die Betonfertigteile des Sockels können jedoch auch als vollständige Ringe ausgebildet sein. Weiterhin ist es möglich, die einzelnen Betonfertigteile der Ringwand als rechteckige, ebene Platten auszubilden, welche gegeneinander verspannt und zu einer Ringwand montiert werden. In jedem Falle kann durch einen Aufbau des Fundaments aus Betonfertigteilen eine vorteilhafte schnelle Montage im Hafenbereich erzielt werden. Die Fertigteile können günstig außerhalb des Hafens vorgefertigt werden und in einfacher Weise zu einem sehr schwimmstabilen Fundament zusammengebaut werden. Dadurch, dass der Sockel bereits in dem Fundament integriert ist, entfallen aufwändige Bauarbeiten nach dem Absenken des Fundaments. Dennoch ist das Fundament bedingt durch seinen schwimmstabilen Aufbau einfach an den Einbauort verbringbar.

Um den Schwimmkörper während des Absenkens zu stabilisieren, ist es vorteilhaft, wenn der Schwimmkörper durch Schottwände in einzeln flutbare, ringsegmentförmige Kammern unterteilt ist.

Nach einer anderen Ausführung ist es jedoch ebenfalls vorteilhaft, wenn der Schwimmkörper aus mehreren geschlossenen, insbesondere ringsegmentförmigen Behältern ausgebildet ist. Die Behälter können ebenfalls zum Absenken kontrolliert geflutet werden und gegebenenfalls mit einem Füllmaterial verfüllt werden. Nach dem Absenken des Fundaments können diese einfach demontiert und für die Errichtung anderer Anlagen weiter verwendet werden.

Eine andere Ausführung sieht vor, dass der Schwimmkörper aus mehreren geschlossenen, tonnenförmigen Behältern ausgebildet ist, welche ringförmig um den Sockel angeordnet sind. Die Behälter können besonders günstig hergestellt werden und unabhängig von den Abmessungen des Sockels für andere Anlagen weiterverwendet werden.

Weiterhin kann der Schwimmkörper auch aus mehreren schwimmfähigen Auftriebskörpern bestehen, welche vorzugsweise aus Betonfertigteilen gefertigt sind. Auch diese können demontierbar ausgeführt sein.

Der Schwimmkörper bzw. die Stahl- oder Betonbehälter kann auch nur teilweise demontierbar ausgeführt sein, so dass ein Teil des Schwimmkörpers bzw. der Behälter ballastiert werden kann und ein anderer Teil weiter verwendet werden kann. Teile des Schwimmkörpers können auch aus konstruktiven Gründen an dem abgesenkten Fundament verbleiben oder zur Ausbildung eines Biotops genutzt werden.

Nach der Fertigstellung des Fundaments mit dem Sockel und dem Schwimmkörper wird das Fundament in Einbaulage beispielsweise auf einem Schwimmponton aus dem Hafenbereich geschleppt, gewassert, darauf an den Einbauort geschleppt und anschließend durch Fluten des Schwimmkörpers in Einbaulage versenkt. Eine Aufrichtung oder äußere Stabilisierung durch Schwimmkräne o.ä. ist hierbei nicht erforderlich. Das Fundament kann jedoch auch komplett in einem Trockendock oder an Land gefertigt und anschließend gewassert werden.

Vorzugsweise wird das Fundament durch Fluten des Schwimmkörpers auf den Meeresgrund abgesenkt. Zum Absenken des Fundaments ist es weiterhin vorteilhaft, wenn auch ein Innenraum des Sockels der Windkraftanlage flutbar ist.

Daneben kann es vorteilhaft sein, wenn ein Innenraum des Schwimmkörpers und/oder des Sockels mit einem Füllmaterial verfüllbar ist, um das Gewicht des Fundaments zu erhöhen.

Anstelle eines Absenken auf den Meeresgrund kann es jedoch je nach Bodenbeschaffenheit ebenfalls vorteilhaft sein, wenn das schwimmfähige Fundament durch Fluten des Schwimmkörpers auf Pfähle abgesenkt wird. Mittels der Pfähle ist eine Gründung auch auf schlechten Böden möglich. Zudem kann hierbei zugleich ein günstiger Kolkschutz erzielt werden, da das Wasser zwischen den Pfählen unter dem Fundament hindurchströmen kann. Vorzugsweise sind hierbei drei Pfähle im Wesentlichen höhengenau in den Boden eingebracht. Um das Fundament auf die Pfähle aufzusetzen, kann es ggf. mittels Spannvorrichtungen gegen die Pfähle gespannt werden und hierdurch justiert werden. Anschließend wird ein Zwischenraum zwischen den Pfählen und einer Unterseite des Fundaments vorzugsweise mit Beton verfüllt.

Nach einer vorteilhaften Ausführungsform wird der Schwimmkörper des Fundaments nach dem Absenken entfernt. Das Fundament weist hierbei vorzugsweise eine schwere Bodenplatte auf, so dass es auch ohne eine Sand- oder Kiesfüllung schwer genug ist. Die Demontage des Schwimmkörpers ist besonders einfach, wenn der Schwimmkörper aus mehreren geschlossenen Behältern besteht.

Daneben ist es vorteilhaft, wenn die Bodenplatte eine kreisringförmige Aufstandsfläche aufweist. Die Lastabtragung in den Untergrund ist hierdurch in besonders günstiger Weise zu bewerkstelligen. Ist die Bodenplatte kegelförmig ausgebildet, kann dennoch ein ausreichendes Gewicht der Bodenplatte erzielt werden.

Daneben ist es vorteilhaft, wenn der Aufbau der Anlage aus vorzugsweise ringsegmentförmigen Betonfertigteilen aufgebaut ist. Diese können in günstiger Weise in großen Stückzahlen vorgefertigt und einfach an die Baustelle transportiert werden.

Gemäß der Erfindung sind die Betonfertigteile des Aufbaus und/oder des Sockels ohne Anordnung eines Dicht- oder Verbundmittels trocken gegeneinander und/oder die Bodenplatte verspannt. Eine Abdichtung beispielsweise mittels Epoxydharz ist hierbei nicht erforderlich. Dabei werden die Kontaktstellen der Betonfertigteile vor dem Verspannen überschliffen, so dass ein planes Aufeinanderliegen der Betonfertigteile gewährleistet wird.

Weiterhin ist es vorteilhaft, wenn die Kontaktstellen zumindest teilweise eine Schubverzahnung bzw. Profilierung aufweisen. Neben der Aufnahme von Kräften kann die Schubverzahnung hierbei auch dem passgenauen Aneinandersetzen der Betonfertigteile dienen.

Weiterhin ist es vorteilhaft, wenn der Sockel einen ringförmigen Befestigungsflansch zur Befestigung eines Stahlturmes aufweist. Dieser kann an Land vorgefertigt und im Ganzen auf den Sockel montiert werden.

Weiterhin ist es vorteilhaft, wenn nach dem Absenken des Fundaments ein Innenraum des Sockels und/oder des Schwimmkörpers gelenzt wird. Der Innenraum zumindest des Sockels kann hierdurch in vorteilhafter Weise für Lagerzwecke oder zur Anordnung von Technikteilen der Anlage verwendet werden.

Ebenso kann es jedoch vorteilhaft sein, nach dem Absenken des Fundaments den Innenraum des Sockels und/oder des Schwimmkörpers mit einem Füllmaterial, beispielsweise Sand oder Kies zu verfüllen.

Weitere Vorteile der Erfindung werden anhand der nachfolgend dargestellten Ausführungsbeispiele beschrieben. Es zeigen:
- **Figur 1**: Eine erfindungsgemäße Off-Shore-Anlage als Übersicht,
- **Figur 2**: eine Schnittdarstellung eines erfindungsgemäßen Fundamentes,
- **Figur 3**: eine alternative Ausführung eines Fundamentes,
- **Figur 4**: eine Draufsicht auf ein Fundament einer erfindungsgemäßen Off-Shore-Anlage,
- **Figur 5**: eine perspektivische Darstellung eines Behälters als Teil eines Schwimmkörpers und
- **Figur 6**: eine perspektivische Darstellung eines erfindungsgemäßen Fundamentes mit tonnenförmigen Behältern.

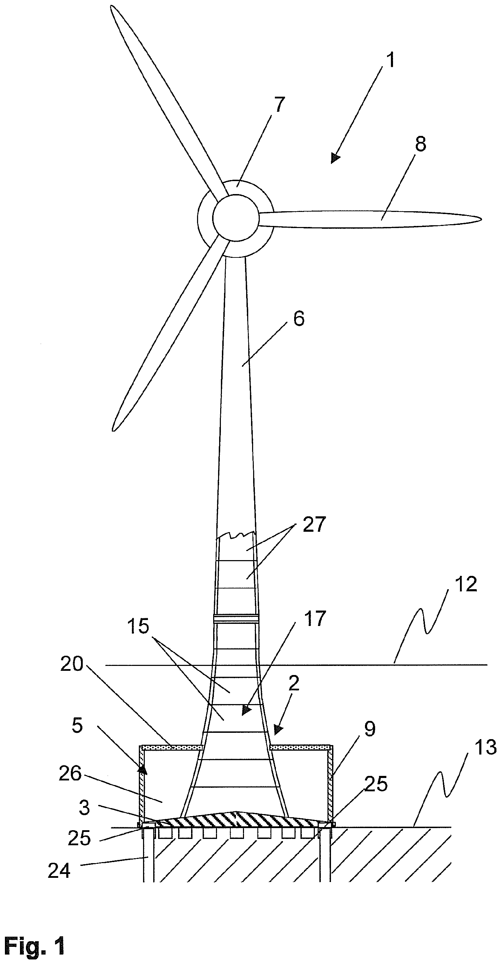

Figur 1 zeigt eine erfindungsgemäße Off-Shore-Anlage 1 in einer schematischen Darstellung in einem Teilschnitt. Die Anlage 1 ist vorliegend als Windkraftanlage auf einem erfindungsgemäßen Fundament 2 ausgeführt, es kann jedoch anstelle einer Windkraftanlage auch eine andere Anlage 1, beispielsweise eine Bohrplattform o.ä. auf dem Fundament aufgebaut werden.

Die Windkraftanlage 1 beinhaltet ein schwimmfähiges Fundament 2, welches in der vorliegenden Darstellung eine Bodenplatte 3, einen Sockel 4 sowie einen Schwimmkörper 5 beinhaltet. Weiterhin beinhaltet die Windkraftanlage 1 einen Turm 6, eine Maschinengondel 7 sowie den Rotor 8. Anstelle des Turmes 6 einer Windkraftanlage 1 kann selbstverständlich auch ein anderer Aufbau 6 mit entsprechenden Funktionseinheiten auf dem Fundament aufgebaut sein.

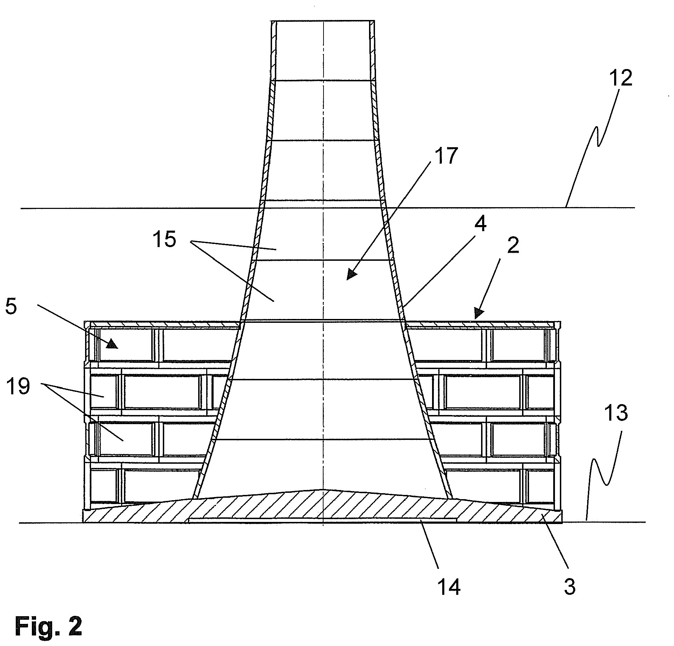

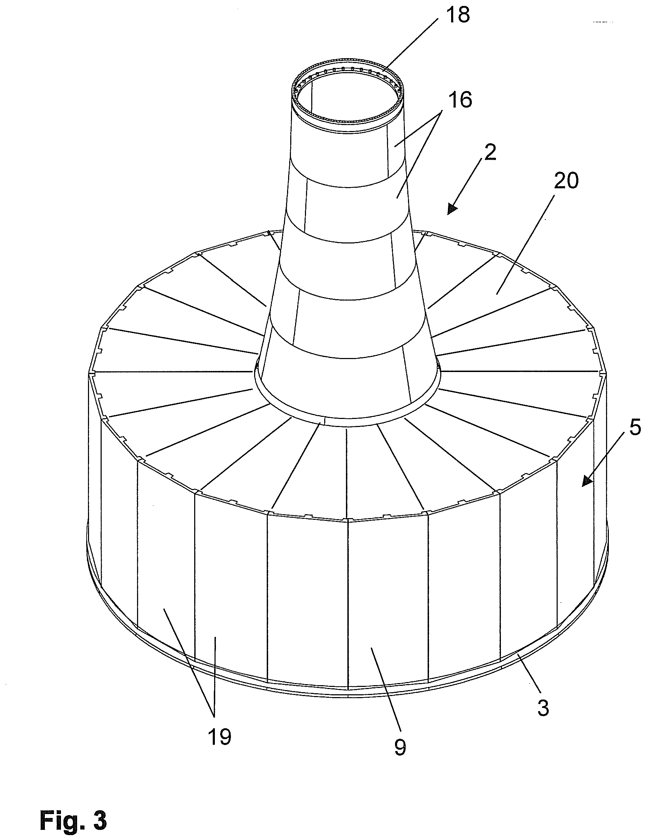

Das schwimmfähige Fundament 2, welches in Figur 2 in einer geschnittenen Darstellung und in Figur 3 in einer alternativen Ausführung in einer perspektivischen Darstellung gezeigt ist, beinhaltet eine stabile Bodenplatte 3, welche vorzugsweise aus Beton ausgeführt ist und eine schlaffe Bewehrung beinhaltet. Die Bodenplatte 3 ist hierbei rund ausgeführt und weist einen Durchmesser von etwa 30-35 Metern auf.

Unterseitig kann die Bodenplatte eine Ausnehmung 14 aufweisen, so dass die Bodenplatte 3 eine kreisringförmige Aufstandsfläche besetzt, wie in Figur 2 ersichtlich. Zudem kann die Bodenplatte 3 leicht kegelförmig ausgebildet sein. Hierdurch kann eine günstige Lastabtragung in das Bett am Meeresgrund 13 bei einem hohen Gewicht der Bodenplatte 3 erzielt werden. Die Bodenplatte kann hierbei in Ortbeton an Land hergestellt und anschließend auf ein Schwimmponton in einem Hafenbecken verbracht werden, oder bevorzugt auf einem Schwimmponton in Ortbeton betoniert werden. Auf dem im Hafenbecken liegenden Schwimmponton wird anschließend der Sockel 4 mittels Spanngliedern auf der Bodenplatte 3 verspannt. Der Sockel 4 kann hierbei bereits an Land vorgefertigt sein und im Hafenbecken nur noch gegen die Bodenplatte 3 verspannt werden, oder er kann im Hafenbecken auf dem Schwimmponton aus Betonfertigteilen 15 aufgebaut werden.

Die einzelnen Betonfertigteile 15 des Sockels bestehen hierbei aus einzelnen ringförmigen Abschnitten, wobei jeder Abschnitt wiederum aus mehreren Ringsegmenten 16 bestehen kann, wie in Figur 3 dargestellt. Um den Sockel 4 auf der Bodenplatte 3 zu verspannen, können in bekannter Weise in der Wand der Betonfertigteile 15 bzw. der Ringsegmente 16 Kanäle für Spannglieder angeordnet sein. Anstelle die Spannglieder in der Wandung zu führen, ist es jedoch ebenso auch möglich, Spannglieder außerhalb der Wand im Innenraum 17 des Sockels oder außerhalb des Sockels 4 anzuordnen. Im Innenraum 17 des Sockels 4 verlaufende Spannglieder sind hierbei kostengünstig anzuordnen und zugleich vor Korrosion geschützt. Ebenso können in an sich bekannter Weise in Kanälen geführte Spannglieder nach dem Verspannen mit einem Füllmittel dicht verpresst werden, um einen Korrosionsschutz zu erzielen. Ebenso werden die Ringsegmente 16 mittels Spannmitteln verspannt und ggf. anschließend verpresst. Um ein Auslaufen des Vergussmittels zu vermeiden, können hierbei gegebenenfalls auch Dichtmittel angeordnet werden.

Nach der Montage des Sockels 4 auf die Bodenplatte 3 wird schließlich auf dem Schwimmponton (nicht dargestellt) der Schwimmkörper 5 des Fundaments 2 montiert. Der Schwimmkörper 5 besteht nach einer ersten Ausführung ebenfalls im Wesentlichen aus Betonfertigteilen 19, welche ebenfalls vorgefertigt und im Hafenbecken schnell montiert werden können. Der Schwimmkörper 5 ist hierbei ringförmig um den Sockel 4 auf der Bodenplatte ausgebildet. Hierdurch ist es einerseits möglich, den Sockel 4 in der Bodenplatte 3 unabhängig von dem Schwimmkörper 5 zu verankern und, sofern erwünscht, den Schwimmkörper 5 nach dem Absenken des Fundaments 2 zu entfernen. Sofern erforderlich, kann der Schwimmkörper jedoch auch mit einem Füllmaterial verfüllt werden, um ein ausreichendes Gewicht des abgesenkten Fundaments zu erzielen.

Insbesondere kann jedoch durch die ringförmige Geometrie des Schwimmkörpers 5 eine günstige Schwerpunktlage des Fundaments 2 erzielt werden. So ist es möglich, das Fundament 2 mit dem Schwimmkörper 5 und dem Sockel 4 bereits im Hafenbereich vollständig in Einbaulage zu fertigen, zu wassern, in Einbaulage an den Einbauort zu schleppen und dort ebenfalls in Einbaulage zu versenken. Das Fundament ist besonderes schwimmstabil und in einfacher Weise aus Fertigteilen aufbaubar, so dass eine schnelle Montage im Hafenbereich erfolgen kann.

Die Betonfertigteile 19 des Schwimmkörpers können hierbei ähnlich wie die des Sockels 4 als Ringsegmente ausgebildet sein, wie in Figur 2 dargestellt. Alternativ können, wie in Figur 3 ersichtlich, die Betonfertigteile 19 auch aus einzelnen rechteckigen Platten bestehen. Die Fertigteile 19 des Schwimmkörpers werden hierbei ebenfalls gegeneinander sowie gegen die Bodenplatte 3 mittels geeigneter Spannmittel verspannt. Nach einer weiteren, nicht dargestellten Alternative ist es auch möglich, die äußere Ringwand 9 des Schwimmkörpers 5 in Ortbeton auf die Bodenplatte 3 zu betonieren.

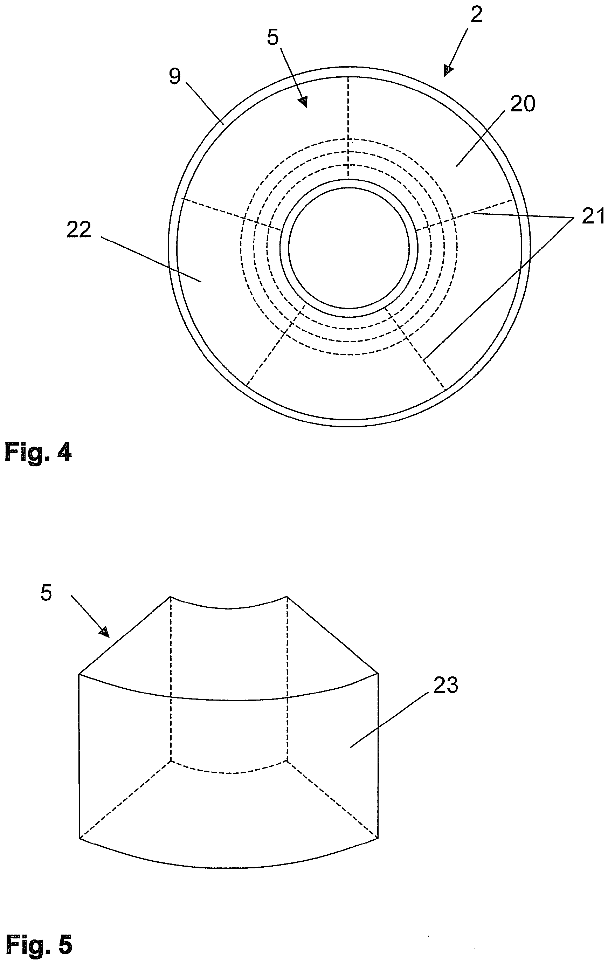

Nach dem Montieren der Ringwand 9 des Schwimmkörpers 5 wird schließlich die Deckplatte 20 des Schwimmkörpers 5 auf die Ringwand 9 montiert. Die Deckplatte 20 kann hierbei eine durchgehende, ringförmige Deckplatte 20 sein, wie in der Draufsicht der Figur 4 dargestellt, oder kann als Elementdecke ausgeführt sein, wie in Figur 3 ersichtlich. Die Deckplatte 20 kann in diesem Fall aus einzelnen, kreisringsegmentförmigen Fertigteilen bestehen. Eine Kombination von Fertigteil- und Ortbetonbauweise ist ebenfalls möglich.

Wie insbesondere in der Schnittdarstellung der Figur 2 ersichtlich, wird der Schwimmkörper hierbei derart aufgebaut, dass die Bodenplatte 3 zugleich den Boden des Schwimmkörpers 5 bildet.

Figur 4 zeigt eine Draufsicht auf ein Fundament einer erfindungsgemäßen Windkraftanlage, wobei die Deckplatte 20 kreisringförmig in Ortbeton ausgebildet ist. In gestrichelten Linien dargestellt sind die nach unten hin sich aufweitenden Wandungen des Sockels 4. Wie weiterhin in Figur 4 gezeigt, können zur Stabilisierung des Schwimmkörpers 5 einzelne Schottwände 21 in dem Schwimmkörper 5 angeordnet werden. Die Schottwände 21 können hierbei ebenfalls als Betonfertigteile vorgefertigt sein. Vorzugsweise werden die Schottwände 21 derart angeordnet, dass sich einzelne kreisringsegmentförmige Kammern 22 ergeben. Durch die Schottwände 21 wird einerseits sowohl die Stabilität des Schwimmkörpers 5 erhöht und andererseits am Einbauort ein gezieltes Fluten ermöglicht, um das Fundament 2 ohne eine Kippgefahr in Einbaulage absenken zu können. Die Kammern 22 weisen hierzu jeweils wenigstens eine hier nicht dargestellte Öffnung bzw. entsprechende Ventile auf, um ein gezieltes Fluten zu ermöglichen.

Eine alternative Ausführung des Schwimmkörpers 5 ist in der Darstellung der Figur 5 perspektivisch gezeigt. Der Schwimmkörper 5 wird hierbei aus mehreren vorzugsweise ringsegmentförmigen Behältern 23 gefertigt, welche um den Sockel 4 angeordnet und an der Bodenplatte 3 und/oder dem Sockel 4 befestigt werden. Der Schwimmkörper 5 kann in diesem Fall nach dem Absenken des Fundaments 2 in besonders einfacher Weise von der Fundamentplatte gelöst und wieder entfernt werden. Die Bodenplatte 3 ist hierbei derart schwer ausgeführt, dass diese auch nach dem Entfernen des gefluteten Schwimmkörpers 5 über ein ausreichendes Gewicht verfügt. Die Ausführung mit einzelnen Behältern 23 ist daher insbesondere für kleinere Windkraftanlagen 1 geeignet. Auch die Behälter 23 verfügen zum gezielten Fluten über eine oder mehrere Öffnungen bzw. Ventile. Zum Demontieren des Schwimmkörpers 5 bzw. der Behälter 23 ist es vorteilhaft, wenn der Innenraum der Behälter 23 lenzbar ist, um den Auftrieb zu erhöhen und die Behälter 23 an die Wasseroberfläche zu befördern. Die Behälter 23 können in diesem Fall an anderen zu errichtenden Windkraftanlagen 1 weiterverwendet werden. Vorzugsweise sind die Behälter 23 als Stahlbehälter ausgeführt, es können jedoch in ähnlicher Weise auch schwimmfähige Behälter bzw. Auftriebskörper aus Beton oder Betonfertigteilen verwendet werden. Da sehr häufig kostspielige künstliche Biotope und Riffe angelegt werden, ist es jedoch ebenfalls denkbar, den Schwimmkörper 5 nach dem Versenken an dem Fundament zu belassen und an verschiedenen Stellen zu öffnen, um durch einen Wasseraustausch ein Biotop auszubilden. Je nach Standort können jedoch die Behälter des Schwimmkörpers jedoch auch am abgesenkten Fundament verbleiben und für eine Ballastierung im Endzustand genutzt werden.

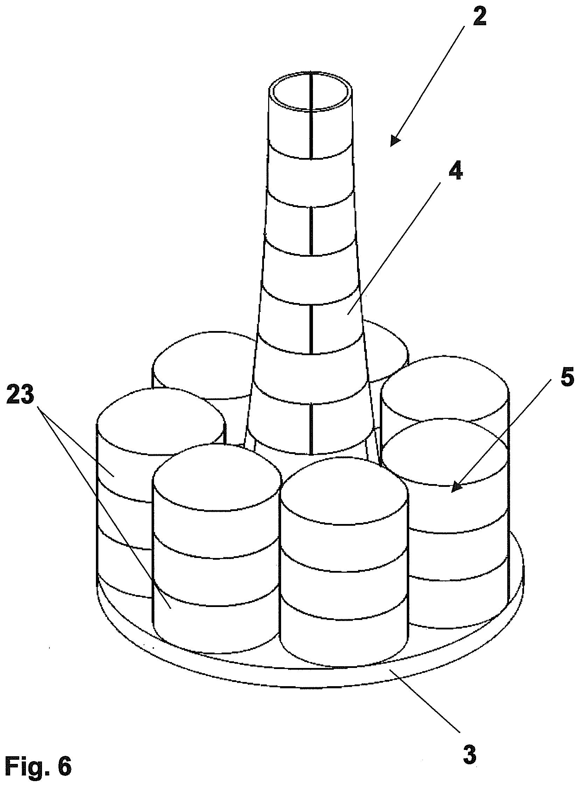

Figur 6 zeigt eine weitere Ausführung der Erfindung, bei welcher der Schwimmkörper 5 aus mehreren tonnenförmigen Behältern 23 aufgebaut ist. Die tonnenförmigen Behälter 23 können besonders günstig gefertigt werden, da diese unabhängig von den Abmessungen des Fundaments 2 und des Sockels 4 gestaltet werden können. Die Behälter 23 sind ebenfalls ringförmig um den Sockel 4 angeordnet, um den Schwimmkörper 5 zu bilden. Das Fundament 2 weist auch bei dieser Ausführung eine gute Schwimmstabilität auf. Die Behälter 23 können wie oben (Fig. 5) beschrieben gezielt geflutet werden, um den Absenkvorgang kontrolliert durchzuführen und ein Kippen des Fundaments 2 zu vermeiden. Vorzugsweise wird Absenkvorgang eingeleitet, indem zunächst die Behälter 23 und das Innere des Sockels 4 geflutet werden. Anschließend werden lediglich die Behälter 23 weiter geflutet, um das Fundament 2 vollständig und gleichmäßig auf den Meeresgrund 13 abzusenken. Nach dem Absenken des Fundaments 2 können die Behälter 23 demontiert und für andere Anlagen 1 weiter verwendet werden. Um eine Anpassung an verschiedene Abmessungen der Anlagen 1 zu erzielen, kann die Anzahl der Behälter 23 entsprechend reduziert oder erhöht werden.

Weiterhin können auch nach der Ausführung der Figur 6 die einzelnen Behälter 23 aus Stahl, Beton oder Betonfertigteilen ausgeführt sein oder einen kombinierten Aufbau aufweisen. So können beispielsweise die unteren Ringsegmente der tonnenförmigen Behälter 23 aus Beton hergestellt sein und nach dem Absenken des Fundaments 2 am Einbauort verbleiben, während über den Ringsegmenten demontierbare Stahlbehälter angeordnet sind.

Je nach Ausführung der Anlage 1 und der Bodenplatte 3 können die Schwimmkörper jedoch auch mit einem Füllmaterial verfüllt werden und auf der Bodenplatte 3 verbleiben oder zur Ausbildung eines Biotops genutzt werden.

Nach der Fertigstellung des Fundaments 2 mit dem Sockel 4 und dem Schwimmkörper 5 auf einem Schwimmponton o.ä. im Hafenbecken wird das Schwimmponton schließlich in tieferes Wasser geschleppt und abgelassen, so dass das Fundament 2 von selbst in Einbaulage schwimmt. Der Tiefgang des Fundaments 2 beträgt hierbei im Schwimmzustand vorzugsweise maximal 6-10 Meter, so dass das Wassern in Hafennähe oder im Hafenbecken möglich ist. Anschließend wird das Fundament 2 an den Einbauort geschleppt und wird dort durch gezieltes Fluten der Kammern 22 bzw. Behälter 23 auf den Meeresgrund 13 versenkt, wie in Figur 2 dargestellt.

Die Vorbereitung des Seebettes erfolgt hierbei in herkömmlicher Weise durch eine Steinschüttung. Andere Kolkschutzmaßnahmen sind jedoch ebenfalls denkbar. Insbesondere bei einer Ausführung, bei welcher der Schwimmkörper 5 nach dem Absenken des Fundaments 2 entfernt wird, ist hierbei auf den Kolkschutz zu achten. So kann beispielsweise bei Demontage der Schwimmkörper die über den verbleibenden Turm hinausstehende Bodenplatte mit Leiteinrichtungen für die Strömung ausgestattet sein. Die Leiteinrichtungen können natürlich auch nachträglich aufgesetzt oder rundherum anmontiert werden, so dass hierdurch eine Auskolkung der Bodenplatte verhindert oder zumindest eingeschränkt werden kann. Dies ist insbesondere in der Nordsee sinnvoll.

Alternativ kann jedoch das Fundament 2, wie in der Figur 1 dargestellt, auf Pfähle 24 abgesenkt werden, sofern die Bodenverhältnisse dies erfordern. Die Pfähle 24 können das Fundament 2 auf Höhe der Meeressohle oder auch mit einem vorbestimmten Abstand darüber abstützen. Hierzu sind vorzugsweise drei Pfähle im Wesentlichen höhengenau in den Meeresgrund 13 eingetrieben. Das Fundament 2 wird hierbei zunächst an die Pfähle 24 gespannt, um eine korrekte Ausrichtung zu erzielen. Mittels der hier nicht dargestellten Spannvorrichtungen wird schließlich eine Feinjustage vorgenommen und anschließend der Zwischenraum 25 zwischen den Pfählen 24 und dem Fundament 2 vergossen. Schließlich wird das Fundament 2 bzw. der Schwimmkörper 5 vollständig geflutet.

In einer weiteren Ausführung kann zur Feinjustierung der Schwimmkörper 5 aber auch zunächst geflutet werden und auf die Pfähle 24 abgesenkt werden. Um die Pfähle 24 mit dem Fundament 2 zu verbinden und eine höhengenaue Ausrichtung zu erzielen, kann anschließend der Schwimmkörper 5 durch ein teilweises Abpumpen des Wassers aus dem Schwimmkörper 5 wieder etwas angehoben werden und ein Zwischenraum 25 zwischen den Pfählen 24 und der Unterseite des Fundaments 2 mit einer Vergussmasse verfüllt werden. Liegt die Bodenplatte 3 bei dieser Ausführung nicht direkt auf dem Untergrund auf, so kann das Wasser unterhalb der Bodenplatte zwischen den Pfählen 24 hindurchströmen, so dass keine weiteren Maßnahmen zum Kolkschutz erforderlich sind. Nach dem Absenken des Fundaments können ggf. der Schwimmkörper 5 bzw. entsprechende Behälter oder Auftriebskörper demontiert werden.

Wird bei einem geeigneten Untergrund das Fundament 2 direkt auf der Meeressohle, also ohne Pfähle 24 aufgelagert, so ist es vorteilhaft, wenn das Fundament 2 bzw. die Bodenplatte zumindest teilweise, vorzugsweise aber vollflächig, beispielsweise mit Untergussmörtel untergossen ist. Das Fundament wird dabei gegenüber der Meeressohle ausgerichtet und feinjustiert und in dieser Lage durch den Unterguss fixiert.

Nachdem das Fundament am Einbauort versenkt ist, wird schließlich die Windkraftanlage 1 mit dem Turm 6, der Maschinengondel 7 und dem Rotor 8 am Einbauort komplettiert. Hierbei kann ein Turm 6 aus Betonfertigteilen 27 oder ein Stahlturm verwendet werden.

Die Betonfertigteile 15, 16, 27 des Sockels 4 bzw. auch eines Turmes 6 der Windkraftanlage 1, der ebenso wie der Sockel 4 in der vorbeschriebenen Weise aus Fertigteilen 15 bzw. Ringsegmenten 16 aufgebaut werden kann, werden erfindungsgemäß trocken, das heißt, ohne Anordnung eines Dicht- oder Verbundmittels wie beispielsweise Epoxidharz, aufeinander gespannt. Die Betonfertigteile 15, 16, 27 werden hierbei auch vor dem Verspannen überschliffen, um eine glatte Auflagefläche und gute Verbindung mit dem jeweils angrenzenden Fertigteil 15, 27 zu erzielen. Die Kontaktstellen der Fertigteile 15, 27 können hierbei glatt ausgeführt sein oder auch eine Schubverzahnung aufweisen. Diese können nicht nur der Aufnahme von Kräften, sondern auch der lagegenauen Anordnung der Fertigteile 15, 27 zueinander dienen. Ebenso können auch die Betonfertigteile 19 des Schwimmkörpers 5 in der beschriebenen Weise montiert werden.

Auf dem Sockel 4 kann schließlich ein Befestigungsflansch 18, wie in Figur 3 gezeigt, angeordnet werden, um einen gegebenenfalls vorgefertigten Turm 6 aus Stahl am Einbauort auf dem Sockel 4 anzuordnen. Der Flansch 18 kann hierbei als Schraubflansch oder auch als Spanngliederflansch ausgeführt sein. Der Befestigungsflansch 18 ist hierzu ringförmig ausgebildet und weist einen im Wesentlichen U- oder L-förmigen Querschnitt auf. Der Stahlturm kann hierbei vorgefertigt sein, oder ebenfalls erst vor Ort aus einzelnen, beispielsweise ringförmigen Elementen mit entsprechenden Flanschen zusammengesetzt werden.

Wird der Turm 6 hingegen aus Betonfertigteilen 27 aufgebaut, so wird dieser ebenso wie der Sockel 4 gegen die Bodenplatte 3 und/oder gegen den Sockel 4 verspannt. Die Spannglieder können hierbei in Hüllrohren der Wandungen der Betonfertigteile 15, 27 verlaufen oder extern angeordnet sein, wobei diese vorzugsweise im Innenraum des Sockels 4 bzw. des Turmes 6 verlaufen. Weiterhin ist es auch möglich, Anker in verschiedenen Höhen sowohl an dem Sockel 4 wie auch dem Turm 6 vorzusehen, und den Turm 6 bzw. den Sockel 4 nur jeweils über eine Teillänge zu verspannen. Das Nachspannen wird hierdurch erleichtert. Derartige Anker können ebenfalls innen- oder außenliegend vorgesehen werden. Weiterhin ist es auch möglich, im Innenraum 17 des Sockels 4 bzw. des Turmes 6 verlaufende Spannglieder an einer Koppelstelle nach Außen zu ziehen, um das Spannen zu erleichtern.

Weiterhin kann es vorgesehen sein, zumindest den Innenraum 17 des Sockels 4 zu lenzen und als Geräte- oder Lagerraum zu verwenden. In diesem Fall kann es vorteilhaft sein, auch den Innenraum 26 des Schwimmkörpers 5 zu entleeren und mit Sand, Kies oder einem anderen dichten Füllmaterial zu verfüllen, um dem Fundament 2 das nötige Gewicht zu verleihen. Je nach Bodenbeschaffenheit kann es jedoch auch vorteilhaft sein, auch den Innenraum 17 des Sockels 4 mit einem Füllmaterial zu verfüllen. Weiterhin kann andererseits auch der Ringraum 26 des Schwimmkörpers, zumindest wenn er in Kammern 22 unterteilt ist, zumindest teilweise gelenzt werden und ebenfalls zu Lagerzwecken verwendet werden.

Die Erfindung ist nicht auf die dargestellten Ausführungsbeispiele beschränkt. Beispielsweise sind selbstverständlich auch unrunde Ausführungen des Fundamentes 2 möglich. Der ringförmig ausgebildete Schwimmkörper 5 muss dementsprechend auch nicht kreisringförmig sein, sondern kann auch eine andere, in sich geschlossenen Form, beispielsweise ein Oval aufweisen. Der Schwimmkörper kann auch nicht ringförmig oder als offener Ring ausgebildet sein, wenn dadurch dennoch eine stabile Lage des Fundaments gewährleistet werden kann. Abwandlungen und Kombinationen im Rahmen der Patentansprüche fallen ebenfalls unter die Erfindung.

## Patentansprüche

1. Windkraftanlage (1), mit einem Fundament (2) mit einer Bodenplatte (3), einem auf der Bodenplatte (3) angeordneten Sockel (4) und einem Aufbau (6), welcher auf dem Sockel (4) montiert ist und an welchem Funktionseinheiten (7,8) der Anlage angeordnet sind, wobei der Sockel (4) der Windkraftanlage (1) aus vorzugsweise ringförmigen oder ringsegmentförmigen Betonfertigteilen (15) aufgebaut ist, **dadurch gekennzeichnet, dass** die Betonfertigteile (15) des Sockels (4) ohne Anordnung eines Dicht- oder Verbundmittels trocken gegeneinander und/oder gegen die Bodenplatte (3) verspannt sind, wobei Kontaktstellen der Betonfertigteile (15) vor dem Verspannen überschliffen sind.

2. Windkraftanlage nach dem vorhergehenden Anspruch, **dadurch gekennzeichnet, dass** der Aufbau (6) der Anlage (1) aus vorzugsweise ringsegmentförmigen Betonfertigteilen (27) aufgebaut ist und dass die Betonfertigteile (27) des Aufbaus (6) trocken gegeneinander und/oder gegen den Sockel verspannt sind.

3. Windkraftanlage nach dem vorhergehenden Anspruch, **dadurch gekennzeichnet, dass** Kontaktstellen der Betonfertigteile (27) vor dem Verspannen überschliffen sind.

4. Windkraftanlage nach einem der vorhergehenden Ansprüche, **dadurch gekennzeichnet, dass** die Kontaktstellen der Betonfertigteile (15, 27) zumindest teilweise eine Schubverzahnung aufweisen.

5. Windkraftanlage nach einem der vorhergehenden Ansprüche, **dadurch gekennzeichnet, dass** Spannglieder zum Verspannen des Sockels (4) und/oder des Aufbaus (6) außerhalb der Wand des Sockels (4) und/oder des Aufbaus (6) angeordnet sind.

6. Windkraftanlage nach einem der vorhergehenden Ansprüche, **dadurch gekennzeichnet, dass** auf verschiedenen Höhen des Sockels (4) und/oder des Aufbaus (6) Anker vorgesehen und der Sockel (4) und/oder der Aufbau (6) nur über Teillängen verspannt sind.

7. Windkraftanlage nach einem der Ansprüche 1 oder 4 - 6, **dadurch gekennzeichnet, dass** der Sockel (4) einen ringförmigen Befestigungsflansch (18) zur Befestigung eines Stahlturmes (6) einer Windkraftanlage aufweist.

8. Windkraftanlage nach einem der vorhergehenden Ansprüche, **dadurch gekennzeichnet, dass** die Bodenplatte (3) des Fundaments eine kreisringförmige Aufstandsfläche aufweist.

9. Windkraftanlage nach einem der vorhergehenden Ansprüche, **dadurch gekennzeichnet, dass** das Fundament (2) schwimmfähig und durch Fluten eines Hohlraumes absenkbar ist, wobei das Fundament einen ringförmig um den Sockel (4) ausgebildeten, flutbaren Schwimmkörper (5) beinhaltet.

10. Windkraftanlage nach dem vorhergehenden Anspruch, **dadurch gekennzeichnet, dass** der Schwimmkörper (5) aus mehreren geschlossenen, insbesondere ringsegmentförmigen oder tonnenförmigen, Behältern (23) ausgebildet ist, welche ringförmig um den Sockel angeordnet sind.

11. Verfahren zum Errichten einer Windkraftanlage (1) mit einem Fundament (2) mit einer Bodenplatte (3), einem auf der Bodenplatte (3) angeordneten Sockel (4) und einem Aufbau (6), welcher auf dem Sockel (4) montiert wird und an welchem Funktionseinheiten (7, 8) der Anlage (1) angeordnet werden, wobei auf die Bodenplatte (3) ein Sockel (4) aus vorzugsweise ringsegmentförmigen Betonfertigteilen (15) montiert wird, **dadurch gekennzeichnet, dass** die Betonfertigteile (15) des Sockels (4) ohne Anordnung eines Dicht- oder Verbundmittels trocken gegeneinander und/oder gegen die Bodenplatte (3) des Fundaments (2) verspannt werden, wobei Kontaktstellen der Betonfertigteile (15, 27) vor dem Verspannen überschliffen werden.

12. Verfahren nach dem vorhergehenden Anspruch, **dadurch gekennzeichnet, dass** der Aufbaus (6) der Anlage (1) aus vorzugsweise ringsegmentförmigen Betonfertigteilen (27) aufgebaut wird und dass die Betonfertigteile (27) des Aufbaus (6) trocken gegeneinander verspannt werden.

13. Verfahren nach einem der Ansprüche 11 oder 12, **dadurch gekennzeichnet, dass** Kontaktstellen der Betonfertigteile (27) vor dem Verspannen überschliffen werden.

14. Verfahren nach einem der Ansprüche 11 bis 13, **dadurch gekennzeichnet, dass** Spannglieder zum Verspannen des Sockels (4) und/oder des Aufbaus (6) außerhalb der Wand des Sockels (4) und/oder des Aufbaus (6) angeordnet werden.

## Claims

1. Wind power station (1), with a foundation (2) having a bottom slab (3), a base (4) arranged on the bottom slab (3), and a superstructure (6) mounted on the base (4), and on which functional units (7, 8) of the station are arranged, wherein the base (4) of the wind power station (1) is constructed preferably from annular or annular segmented prefabricated concrete components (15), **characterized in that** the prefabricated concrete components (15) of the base (4) are braced dry against one another and/or against the bottom slab (3) without using a sealing or composite material, wherein contact points of the prefabricated concrete components (15) are ground before bracing.

2. Wind power station according to the previous claim, **characterized in that** the superstructure (6) of the station (1) is constructed preferably from annular segmented prefabricated concrete components (27) and that the prefabricated concrete components (27) of the superstructure (6) are braced dry against one another and/or against the base.

3. Wind power station according to the previous claim, **characterized in that** contact points of the prefabricated concrete components (27) are ground before bracing.

4. Wind power station according to one of the previous claims, **characterized in that** the contact points of the prefabricated concrete components (15, 27) are at least partially shear serrated.

5. Wind power station according to one of the previous claims, **characterized in that** bracing elements for bracing the base (4) and/or the superstructure (6) are arranged outside of the wall of the base (4) and/or of the superstructure (6).

6. Wind power station according to one of the previous claims, **characterized in that** bracings are provided on various heights of the base (4) and/or the superstructure (6) and the base (4) and/or the superstructure (6) are braced only via partial lengths.

7. Wind power station according to one of the previous claims 1 or 4 through 6, **characterized in that** the base (4) has an annular fastening flange (18) for fastening a steel tower (6) of a wind power station.

8. Wind power station according to one of the previous claims, **characterized in that** the bottom slab (3) of the foundation has a circular annular contact area.

9. Wind power station according to one of the previous claims, **characterized in that** the foundation (2) can float and can be sunk by flooding a hollow space, wherein the foundation contains a floating body (5) that can be flooded, designed annularly around the base (4).

10. Wind power station according to the previous claim, **characterized in that** the floating body (5) consists of several closed, especially annularly segmented or barrel-shaped containers (23) arranged annularly around the base.

11. Method for erecting a wind power station (1), with a foundation (2), having a bottom slab (3), a base (4) arranged on the bottom slab (3) and a superstructure (6) that is mounted on the base (4) and on which functional units (7, 8) of the station (1) are arranged, wherein a base (4) made of preferably annular segmented prefabricated concrete components (15) is mounted on the bottom slab (3) **characterized in that** the prefabricated concrete components (15) of the base (4) are braced dry against one another and/or against the bottom slab (3) of the foundation (2) without using a sealing or composite material, wherein contact points of the prefabricated concrete components (15, 27) are ground before bracing.

12. Method according to the previous claim, **characterized in that** the superstructure (6) of the station (1) is constructed of preferably annular segmented prefabricated concrete components (27) and that the prefabricated concrete components (27) of the superstructure (6) are braced dry against one another.

13. Method according to one of the claims 11 or 12, **characterized in that** the contact points of the prefabricated concrete components (27) are ground before bracing.

14. Method according to one of the claims 11 through 13, **characterized in that** bracing elements for bracing the base (4) and/or the superstructure (6) are arranged outside the wall of the base (4) and/or the superstructure (6).

## Revendications

1. Centrale éolienne (1) avec une fondation (2) avec une plaque d'assise (3), un socle (4) disposé sur la plaque d'assise (3) et une structure (6) qui est montée sur le socle (4) et sur laquelle sont disposées des unités fonctionnelles (7, 8) de la centrale, dans laquelle le socle (4) de la centrale éolienne (1) est réalisé en éléments en béton préfabriqués (15) de préférence annulaires ou en forme de segments annulaires, **caractérisée en ce que** les éléments en béton préfabriqués (15) du socle (4) sont mis sous contrainte à sec les uns contre les autres et/ou contre la plaque d'assise (3) sans mise en place d'un agent d'étanchéité ou composite, sachant que des points de contact des éléments en béton préfabriqués (15) sont meulés avant la mise sous contrainte.

2. Centrale éolienne selon la revendication précédente, **caractérisée en ce que** la structure (6) de la centrale (1) est réalisée de préférence en éléments en béton préfabriqués (27) en forme de segments annulaires et que les éléments en béton préfabriqués (27) de la structure (6) sont mis sous contrainte à sec les uns contre les autres et/ou contre le socle.

3. Centrale éolienne selon la revendication précédente, **caractérisée en ce que** des points de contact des éléments en béton préfabriqués (27) sont meulés avant la mise sous contrainte.

4. Centrale éolienne selon l'une des revendications précédentes, **caractérisée en ce que** les points de contact des éléments en béton préfabriqués (15, 27) comportent au moins partiellement une denture de cisaillement.

5. Centrale éolienne selon l'une des revendications précédentes, **caractérisée en ce que** des éléments tendeurs pour la mise sous contrainte du socle (4) et/ou de la structure (6) sont disposés hors de la paroi du socle (4) et/ou de la structure (6).

6. Centrale éolienne selon l'une des revendications précédentes, **caractérisée en ce que** des ancres sont prévues à différentes hauteurs du socle (4) et/ou de la structure (6) et le socle (4) et/ou la structure (6) ne sont mis sous contrainte que sur des longueurs partielles.

7. Centrale éolienne selon l'une des revendications 1 ou 4 - 6, **caractérisée en ce que** le socle (4) comporte une bride de fixation (18) annulaire pour la fixation d'une tour en acier (6) d'une centrale éolienne.

8. Centrale éolienne selon l'une des revendications précédentes, **caractérisée en ce que** la plaque d'assise (3) de la fondation présente une surface d'appui annulaire circulaire.

9. Centrale éolienne selon l'une des revendications précédentes, **caractérisée en ce que** la fondation (2) est flottante et peut être submergée par inondation d'un espace creux, dans laquelle la fondation comporte un corps flottant (5) submersible formé de manière annulaire autour du socle (4).

10. Centrale éolienne selon la revendication précédente, **caractérisée en ce que** le corps flottant (5) est composé de plusieurs récipients (23) fermés, en particulier en forme de segments annulaires ou de tonneaux, lesquels sont disposés de manière annulaire autour du socle.

11. Procédé pour édifier une centrale éolienne (1) avec une fondation (2) avec une plaque d'assise (3), un socle (4) disposé sur la plaque d'assise (3) et une structure (6) qui est montée sur le socle (4) et sur laquelle sont disposées des unités fonctionnelles (7, 8) de la centrale (1), dans lequel un socle (4) en éléments en béton préfabriqués (15) de préférence en forme de segments annulaires est monté sur la plaque d'assise (3), **caractérisé en ce que** les éléments en béton préfabriqués (15) du socle (4) sont mis sous contrainte à sec les uns contre les autres et/ou contre la plaque d'assise (3) de la fondation (2) sans mise en place d'un agent d'étanchéité ou composite, sachant que des points de contact des éléments en béton préfabriqués (15, 27) sont meulés avant la mise sous contrainte.

12. Procédé selon la revendication précédente, **caractérisé en ce que** la structure (6) de la centrale (1) est édifiée de préférence en éléments en béton préfabriqués (27) en forme de segments annulaires et que les éléments en béton préfabriqués (27) de la structure (6) sont mis sous contrainte à sec les uns contre les autres.

13. Procédé selon l'une des revendications 11 ou 12, **caractérisé en ce que** des points de contact des éléments en béton préfabriqués (27) sont meulés avant la mise sous contrainte.

14. Procédé selon l'une des revendications 11 à 13, **caractérisé en ce que** des éléments tendeurs pour la mise sous contrainte du socle (4) et/ou de la structure (6) sont disposés hors de la paroi du socle (4) et/ou de la structure (6).
